# FASCICULE DE BREVET EUROPEEN

(11) **EP 3 902 710 B1**
(45) Date de publication et mention de la délivrance du brevet: **04.10.2023**
(21) Numéro de dépôt: 19817335.3
(22) Date de dépôt: 13.12.2019
(51) Int. Cl.: B60S 1/38, B60S 1/40

(54) **ADAPTATEUR POUR MONTURE DE BALAI D'ESSUYAGE DE VÉHICULE AUTOMOBILE**
ADAPTER FÜR EINE KRAFTFAHRZEUGWISCHERBLATTHALTERUNG
ADAPTER FOR MOTOR VEHICLE WIPER BLADE MOUNT

(30) Priorité: 27.12.2018 FR 1874272
(43) Date de publication de la demande: 03.11.2021
(73) Titulaire: Valeo Systèmes d'Essuyage, 78322 Le Mesnil Saint Denis (FR)
(72) Inventeur: HOUSSAT, Stéphane, 63500 ISSOIRE (FR); GAUCHER, Vincent, 63500 ISSOIRE (FR); POTON, Eric, 63500 ISSOIRE (FR)
(74) Mandataire: Valeo Visibility
(86) Numéro de dépôt international: PCT/EP2019/085115
(87) Numéro de publication internationale: WO 2020/136023

(56) Documents cités:
- DE-A1-102009 046 776
- JP-A- 2003 011 789
- US-A1- 2013 007 975
- US-A1- 2014 068 887
- US-A1- 2015 375 716
- US-A1- 2017 036 648

## Description

### Domaine technique

La présente invention se situe dans le domaine des balais d'essuyage d'une vitre de véhicule automobile, et concerne plus particulièrement des adaptateurs pour la fixation d'une monture de balai d'essuyage sur un bras d'essuyage.

### État de la technique antérieure

Dans le domaine des véhicules automobiles, on connait des systèmes d'essuyage qui permettent d'essuyer une paroi vitrée d'un véhicule automobile. D'une manière générale, de tels système d'essuyage comprennent un ou plusieurs balais d'essuyage articulé afin de pouvoir être déplacé contre la paroi vitré. Chaque balai d'essuyage comprend une lame d'essuyage destinée à être mise en contact contre la paroi vitrée afin de pouvoir évacuer l'eau hors de la paroi vitrée, et un bras articulé qui permet d'une part de maintenir la lame d'essuyage au contact de la paroi vitrée, et d'autre part de générer un mouvement pendulaire contre la paroi vitrée.

Plus particulièrement, la lame d'essuyage est portée par une monture qui est rapportée sur le bras articulé. Afin de faciliter les opérations de maintenance, la monture est fixée de manière amovible au bras articulé par l'intermédiaire d'un adaptateur solidaire de la monture et configuré pour être connecté au bras articulé au travers d'au moins une liaison pivot.

Bien entendu, il existe une multitude d'adaptateurs, dépendant véhicules automobiles considérés, des formes et des dimensions des différentes montures et de leurs lames d'essuyage, ainsi que des types de bras articulés auxquels les montures sont destinées à être raccordées. Cette très grande variété de montures et de bras articulés conduit ainsi à concevoir un très grand nombre d'adaptateurs différents afin de pouvoir adapter chaque monture aux différents types de bras articulés, induisant une augmentation des coûts de production du fait de la multiplicité des séries de pièces différentes à fabriquer. En outre, cette situation rend le marché de la deuxième monte plus complexe pour le réparateur occasionnel, car il est nécessaire d'acheter à la fois une monture de balai d'essuyage et l'adaptateur correspondant au bras articulé installé sur le véhicule automobile. DE-A-102009046776 montre un adaptateur pour fixation, d'une monture de balai d'essuyage sur un bras articulé de balai d'essuyage.

Il existe ainsi un besoin de simplification et de rationalisation des dispositifs permettant le remplacement des lames d'essuyage sur un véhicule automobile.

La présente invention a pour objet de répondre au moins en grande partie aux problèmes précédents et de conduire en outre à d'autres avantages en proposant un nouvel adaptateur pour la fixation d'une monture de balai d'essuyage sur un bras articulé de balai d'essuyage.

Un autre but de la présente invention est de faciliter la connexion d'un tel adaptateur à plusieurs types de bras articulés de balai d'essuyage.

Un autre but de la présente invention est de réduire les coûts de fabrication d'un tel adaptateur.

### Exposé de l'invention

L'invention est définie par la revendication 1. Selon un premier aspect, on atteint au moins l'un des objectifs précités avec un adaptateur pour fixation d'une monture de balai d'essuyage sur un bras articulé de balai d'essuyage, l'adaptateur comprenant (i) un capot configuré pour être fixé de manière amovible à un palonnier principal de la monture de balai d'essuyage, et (ii) un système d'attache amovible du bras articulé de balai d'essuyage sur l'adaptateur, le système d'attache amovible comprenant des moyens de fixation temporaire dudit système d'attache amovible sur le capot.

Ainsi le système d'attache amovible de l'adaptateur peut être attaché de manière amovible au capot. Cette configuration avantageuse permet, à partir d'un seul type de capot, de proposer plusieurs systèmes d'attache amovibles correspondants à plusieurs configurations de fixation du bras articulé du balai d'essuyage sur le capot. En effet, il suffit de remplacer un premier type du système d'attache amovible compatible avec un premier type de bras articulé par un deuxième type du système d'attache amovible compatible avec un deuxième type de bras articulé, sans avoir à changer le capot de l'adaptateur conforme au premier aspect de l'invention. Plus particulièrement, le premier type du système d'attache amovible peut facilement être désolidarisé du capot de l'adaptateur conforme au premier aspect de l'invention, en découplant les moyens de fixation temporaire dudit premier type du système d'attache amovible. Il est ainsi possible de rendre l'adaptateur compatible avec plusieurs types de bras articulés, permettant d'accoupler ensemble un balai d'essuyage à un plus grand nombre de bras articulés.

L'adaptateur conforme au premier aspect de l'invention permet ainsi de rationnaliser le remplacement des balais d'essuyage, en augmentant la complémentarité de l'adaptateur correspondant.

L'invention conforme au premier aspect de l'invention se destine tout particulièrement au marché de la deuxième monte des systèmes d'essuyage et/ou des balais d'essuyage et/ou des adaptateurs pour de tels balais d'essuyage. En permettant, à partir d'un même capot d'adaptateur, de proposer une pluralité de types de systèmes d'attaches amovible du bras articulé de balai d'essuyage sur ledit adaptateur, il est ainsi plus facile de connecter un même balai d'essuyage comprenant un tel adaptateur conforme au premier aspect de l'invention à plusieurs types de bras articulés de balai d'essuyage.

Consécutivement, il est possible de fabriquer un plus grand nombre d'exemplaires du capot formant l'adaptateur conforme au premier aspect de l'invention, permettant ainsi de réduire les coûts de fabrication par de simples facteurs d'échelle.

Dans le contexte de l'invention, on les adjectifs suivants sont définis relativement au capot de l'adaptateur conforme au premier aspect de l'invention :
- l'adjectif « longitudinal » fait référence à une direction d'élongation du capot suivant sa plus grande longueur. Lorsque l'adaptateur est monté sur un balai d'essuyage, la direction longitudinale fait référence à l'axe formé par la lame d'essuyage. Par extension, la direction longitudinale fait référence à une direction qui est parallèle ou sensiblement parallèle à la plus grande longueur de la lame d'essuyage ;
- l'adjectif « transversal » ou « latéral » fait référence à une direction d'élongation perpendiculaire à la direction longitudinale, et plus particulièrement une direction perpendiculaire à deux côtés latéraux d'élongation longitudinale du capot. Lorsque l'adaptateur est accouplé à une monture de balai d'essuyage, un axe longitudinal et un axe transversal du capot forment ensemble un plan parallèle à une surface d'appui du capot sur la monture du balai d'essuyage ;
- l'adjectif « vertical » fait référence à une direction simultanément perpendiculaire à la direction longitudinale et à la direction transversale. À titre d'exemple, une direction verticale fait référence notamment à la position relative du palonnier d'une monture de balai d'essuyage par rapport au capot de l'adaptateur conforme au premier aspect de l'invention. Par extension, les adjectifs « au-dessus » et « au-dessous » font référence à une position relative le long de l'axe vertical. Selon l'invention,
- le capot comprend une ouverture centrale délimitée latéralement par deux côtés latéraux, le système d'attache amovible comprenant au moins un organe de montage qui s'étend transversalement au travers de l'ouverture centrale entre les deux cotés latéraux du capot, chaque organe de montage comprenant les moyens de fixation temporaire au capot. Cette configuration avantageuse permet ainsi de loger astucieusement le système d'attache amovible dans l'ouverture centrale afin de limiter l'encombrement du capot. En outre, l'ouverture centrale permet, en fonction des différents types de couplage entre l'adaptateur et le bras articulé, de loger une pluralité de types différents de systèmes d'attache amovible et/ou un nombre variable d'organes de montage formant de tels systèmes d'attache amovible. Avantageusement le système d'attache amovible de l'adaptateur conforme au premier aspect de l'invention comprend un unique organe de montage - afin de simplifier sa conception et sa mise en oeuvre - ou deux organes de montage - afin d'améliorer la tenue de l'adaptateur sur le bras articulé. Dans le cas où le système d'attache amovible comprend deux organes de montage, les organes de montage sont préférentiellement répartis le long d'un axe longitudinal dans l'ouverture centrale du capot ;
- Avantageusement, le système d'attache amovible est configuré pour être assemblé sans jeu dans le capot de l'adaptateur conforme au premier aspect de l'invention. En particulier, chaque organe de montage est configuré pour être inséré sans jeu latéral entre les côtés latéraux du capot, de part et d'autre de l'ouverture centrale. Cet ajustement sans jeu du système d'attache amovible dans de capot permet de bloquer ledit système d'attache amovible dans ledit capot ;
- l'au moins un organe de montage comprend un axe de liaison pivot qui s'étend transversalement au travers de l'ouverture centrale entre les deux côtés latéraux du capot, l'axe de liaison pivot étant délimité latéralement par deux flans latéraux. Cette configuration avantageuse permet ainsi de pouvoir accoupler l'adaptateur sur le bras articulé selon une liaison pivot qui permet à son tour d'améliorer le plaquage du balai d'essuyage contre la paroi vitrée du véhicule automobile ;
- l'axe de liaison pivot comprend une surface cylindrique qui s'étend transversalement entre les deux côtés latéraux du capot ;
- selon une première alternative, la surface cylindrique de l'axe de liaison pivot comprend au moins un méplat qui s'étend au moins en partie entre les côtés latéraux du capot. Selon une deuxième alternative, la surface cylindrique de l'axe de liaison pivot comprend deux méplats qui s'étendent au moins en partie entre les côtés latéraux du capot, les méplats étant préférentiellement diamétralement opposés l'un par rapport à l'autre, relativement à l'axe de liaison pivot. Ces deux alternatives permettent chacune d'accoupler le bras articulé destiné à collaborer avec l'adaptateur conforme au premier aspect de l'invention suivant une configuration prédéfinie de l'organe de montage correspondant. Ces configurations avantageuses permettent aussi de réduire voire empêcher un glissement relatif d'une extrémité du bras articulé collaborant avec la surface cylindrique de la liaison pivot de l'adaptateur conforme au premier aspect de l'invention ;
- afin d'accoupler le bras articulé avec l'organe de montage formant le système d'attache amovible de l'adaptateur conforme au premier aspect de l'invention, la surface cylindrique de l'axe de liaison pivot comprend au moins une gorge qui s'étend au moins en partie entre les côtés latéraux du capot. De manière avantageuse, la surface cylindrique de l'axe de liaison pivot comprend une pluralité de gorges qui s'étendent au moins en partie entre les côtés latéraux du capot, les gorges étant angulairement régulièrement réparties autour de la surface cylindrique, relativement à l'axe de liaison pivot ;
- chaque organe de montage comprend un ou deux flans latéraux qui s'étendent chacun à une extrémité latérale de l'axe de liaison pivot. Dans un plan perpendiculaire à l'axe de liaison pivot de chaque organe de montage, le ou les flans latéraux s'étendent au-delà de la surface cylindrique, de sorte qu'une extrémité terminale du ou des flans latéraux se trouve à une distance non nulle de l'axe de liaison pivot. Lorsqu'il ne comprend qu'un seul flan latéral situé à l'un de ses extrémités latérales, l'organe de montage présente ainsi un profil en « L » ; lorsque l'organe de montage comprend deux flans latéraux situés chacun à une extrémité latérale différente de l'axe de liaison pivot, alors l'organe de montage présente un profil en « U ». Ces différentes configurations permettent de faciliter le montage de l'organe de montage avec le capot, en augmentant les surfaces en regard entre d'une part le ou les flans latéraux du ou des organes de montage formant le système d'attache amovible et, d'autre part, les côtés latéraux du capot. Ces configurations permettent avantageusement d'améliorer un couplage mécanique entre le système d'attache amovible ainsi formé et le capot de l'adaptateur conforme au premier aspect de l'invention ;
- les moyens de fixation temporaire de chaque organe de montage sont configurés pour permettre un assemblage par engagement de formes complémentaires entre l'au moins un des flans latéraux de l'organe de montage et les côtés latéraux du capot. Cette configuration avantageuse permet de réaliser un accouplement simple et rapide à mettre en oeuvre par l'utilisateur, facilitant ainsi l'interchangeabilité du système d'attache amovible sur le capot de l'adaptateur conforme au premier aspect de l'invention ; - Selon l'invention, au moins un des côtés latéraux du capot - et préférentiellement les deux - comprend une rainure formée sur une face du ou des côtés latéraux située du côté de l'ouverture centrale, la rainure s'étendant depuis un bord inférieur en direction d'un bord supérieur et/ou depuis le bord supérieur en direction du bord inférieur. En d'autres termes, la rainure est formée sur la face de l'un ou des deux côtés latéraux délimitant l'ouverture centrale du capot, en regard de l'ouverture centrale. Cette configuration permet avantageusement de prédéfinir la position du système d'attache amovible lorsque ce dernier est monté dans l'ouverture centrale du capot. En outre, la ou les rainures permettent une insertion aisée du système d'attache amovible sur le capot. Dans le cas où chaque côté latéral du capot comprend une rainure, alors, de manière avantageuse, les deux rainures sont alignées longitudinalement l'une par rapport à l'autre et relativement à l'ouverture centrale. À titre d'exemple, cette configuration permet avantageusement à prédéterminer une direction de montage de l'axe de liaison pivot correspondant perpendiculaire à l'axe longitudinal du capot ;
- la ou les rainures formées dans la ou les côtés latéraux du capot sont préférentiellement rectilignes et d'orientation verticale ;
- selon l'invention, la ou les rainures formées sur le ou les côtés latéraux du capot s'étendent depuis le bord inférieur de la face latérale correspondante du capot et en direction du bord supérieur, la ou les rainures étant obstruées au niveau d'une extrémité supérieure par un rebord. Cette configuration avantageuse permet l'insertion de l'organe de montage correspondant par le bord inférieur du capot, l'organe de montage étant inséré jusqu'à venir en butée contre le rebord afin de définir une position verticale de l'organe de montage par rapport au capot. En outre, cette configuration avantageuse permet de bloquer l'organe de montage dans la rainure au regard d'un déplacement vertical orienté vers le haut, assurant ainsi un meilleur maintien lorsque l'adaptateur collabore avec le bras articulé avec lequel il est destiné à collaborer ;
- Avantageusement, une dimension de la rainure prise le long d'un axe longitudinal du capot est sensiblement égale à une dimension d'un flan latéral de l'organe de montage pivot prise le long de l'axe longitudinal, de manière à permettre un assemblage sans jeu latéral de l'organe de montage dans chaque rainure opposée des côtés latéraux du capot. D'une manière plus générale, une forme et/ou une dimension de la ou des rainures est sensiblement identique - à une tolérance d'assemblage prêt - à une forme et/ou une dimension du flan latéral de l'organe de montage correspondant afin de permettre un accouplement par engagement de formes complémentaire dudit flan latéral dans la rainure en regard. Chaque organe de montage est ainsi configuré pour permettre son insertion à l'intérieur de l'ouverture centrale du capot, à l'intérieur d'une rainure ou entre deux rainures latéralement en regard l'une de l'autre et formées dans les côtés latéraux du capot ;
- au moins un des côtés latéraux du capot - et préférentiellement les deux côtés latéraux - comprend, au niveau d'un bord inférieur destiné à être en appui contre le palonnier principal, une encoche destinée à permettre l'insertion d'une plateforme d'appui du palonnier principal. Cette configuration avantageuse permet notamment de prédéfinir une position relative du capot par rapport au palonnier principal de la monture de balai d'essuyage avec laquelle il est destiné à collaborer ;
- l'encoche formée sur l'au moins un côté latéral du capot s'étend en direction d'un bord supérieur, l'encoche étant située dans le prolongement de la rainure correspondante dudit côté latéral correspondant ;
- une dimension de l'encoche, prise selon l'axe longitudinal du capot, est égale ou sensiblement supérieure à la dimension de la rainure prise le long de l'axe longitudinal du capot. Par « sensiblement supérieur », on entend ici qu'une dimension de l'encoche prise selon l'axe longitudinal du capot est égale à une dimension de la rainure correspondante prise suivant le même axe longitudinal, majorée d'un ou plusieurs dixièmes de millimètres ;
- au moins un des organes de montage comprend un dispositif de solidarisation avec le palonnier principal de la monture du balai d'essuyage. Cette configuration avantageuse permet d'améliorer le couplage mécanique du système d'attache amovible, en accouplant mécaniquement le ou les organes de montage au palonnier principal, réduisant ainsi les risques d'arrachement de l'organe de montage correspondant hors du capot de l'adaptateur conforme au premier aspect de l'invention ;
- en particulier, le dispositif de solidarisation d'au moins une partie des organes de montage - et préférentiellement de chaque organe de montage - est du type d'un moyen d'encliquetage configuré pour s'encliqueter dans un dispositif complémentaire formé sur le palonnier principal de la monture de balai d'essuyage ;
- afin de faciliter l'assemblage de l'organe de montage formant le système d'attache amovible de l'adaptateur conforme au premier aspect de l'invention, le dispositif de solidarisation est situé au niveau d'une extrémité inférieure d'au moins un des flans latéraux de l'organe de montage - et préférentiellement de chaque flan latéral de l'organe de montage. Dans le cas où l'organe de montage comprend un axe de liaison pivot, l'extrémité inférieure du flan latéral de l'organe de montage est l'extrémité distale du flan latéral par rapport à l'axe de liaison pivot.
- le capot de l'adaptateur conforme au premier aspect de l'invention comprend un premier organe de verrouillage longitudinal du capot sur le palonnier principal de la monture de balai d'essuyage, le premier organe de verrouillage longitudinal étant configuré pour réaliser un arrêt longitudinal du capot contre le palonnier principal. Cette configuration avantageuse permet de faciliter le montage de l'adaptateur sur le palonnier principal de la monture de balai d'essuyage. En outre, elle permet de réduire les risques d'arrachement du capot hors du palonnier principal, en améliorant le couplage mécanique entre eux. De manière avantageuse, le premier organe de verrouillage longitudinal est du type d'une languette rigide qui s'étend en saillie du capot, à une première extrémité longitudinale dudit capot, la languette rigide étant configurée pour collaborer avec un premier logement complémentaire du palonnier principal ;
- en complément au premier organe de verrouillage, le capot de l'adaptateur conforme au premier aspect de l'invention comprend un deuxième organe de verrouillage longitudinal du capot sur le palonnier principal de la monture de balai d'essuyage. Cette configuration avantageuse permet de faciliter le montage de l'adaptateur sur le palonnier principal de la monture de balai d'essuyage. En outre, elle permet de réduire les risques d'arrachement du capot hors du palonnier principal, en améliorant le couplage mécanique entre eux. En particulier, le deuxième organe de verrouillage longitudinal est avantageusement situé à une deuxième extrémité longitudinale du capot, opposée à la première extrémité du capot, le deuxième organe de verrouillage longitudinal étant du type d'une languette souple configurée pour collaborer par encliquetage avec un deuxième logement complémentaire du palonnier principal. La languette souple fait ainsi office de bouton d'appui permettant d'encliqueter ou de désencliqueter le deuxième organe de verrouillage longitudinal de son deuxième logement complémentaire ;
- le capot comprend un organe de centrage latéral dudit capot par rapport au palonnier principal de la monture de balai d'essuyage, l'organe de centrage latéral étant configuré pour centrer latéralement le capot sur le palonnier principal. Cette configuration avantageuse permet de faciliter la mise en place de l'adaptateur conforme au premier aspect de l'invention sur la monture de balai d'essuyage. En outre, l'organe de centrage latéral permet de réduire les risques d'arrachement du capot par rapport au palonnier principal, notamment au regard d'efforts latéraux apparaissant lorsque le balai d'essuyage est mis en oeuvre sur un véhicule automobile ;
- l'organe de centrage latéral du capot comprend au moins une patte de centrage qui s'étend en saillie à partir d'un bord inférieur du capot et dans le prolongement d'au moins un côté latéral dudit capot, chaque patte de centrage étant configurée pour collaborer avec un côté latéral correspondant du palonnier principal. Ainsi, chaque côté latéral du capot comprend une ou plusieurs pattes de centrage permettant collectivement de centrer latéralement le capot sur le palonnier principal avec lequel il est destiné à collaborer. Dans le cas où les côtés latéraux du capot comprennent plusieurs pattes de centrages, alors chaque côté latéral comprend préférentiellement un nombre égal de pattes de centrage, réparties longitudinalement le long desdits côtés latéraux. Selon une première alternative, la ou les pattes de centrage prennent la forme de protrusions prismatiques qui s'étendent dans le prolongement des côtés latéraux du capot. Dans cette première alternative, une épaisseur latérale de la ou des pattes de centrage, prise le long de la direction latérale du capot, est éventuellement inférieure à une dimension latérale du côté latéral correspondant dudit capot. Dans ce cas, la ou les pattes de centrage sont préférentiellement situées, selon la direction transversale du capot, du côté de l'ouverture centrale, de sorte qu'une paroi latérale de la ou des pattes de centrage soit coplanaire avec une paroi du côté latéral correspondant du capot. Selon une deuxième alternative, la ou les pattes de centrage prennent la forme de crochets d'ancrage qui s'étendent en saillie en dessous des côtés latéraux du capot. Dans un plan transversal du capot, le ou les crochets formant la ou les pattes de centrage ont un profil en « L ». Dans cette deuxième alternative, les pattes de centrages sont éventuellement situées au niveau d'une plateforme du capot qui est situé longitudinalement entre une extrémité longitudinale et l'ouverture centrale dudit capot, la plateforme reliant les deux côtés latéraux du capot et délimitant une étendue longitudinale de l'ouverture centrale ;

- de manière avantageuse, le capot présente un plan longitudinal médian par rapport auquel le capot est symétrique. Complémentairement ou alternativement à la symétrie longitudinale globale du capot, la ou les rainures présentes sur chacun des côtés latéraux du capot sont avantageusement symétriques l'une de l'autre par rapport au plan longitudinal médian, et/ou le premier et/ou le deuxième organe de verrouillage longitudinal médian sont respectivement symétriques par rapport au plan longitudinal, et/ou l'organe de centrage latéral du capot est symétrique par rapport au plan longitudinal médian ;
- l'adaptateur conforme au premier aspect de l'invention ou le capot et/ou le système d'attache amovible sont formés de plastique afin de réduire les coûts de fabrication. À titre d'exemple non limitatif, le capot de l'adaptateur et/ou le système d'attache amovible sont obtenus par moulage.

Selon un deuxième aspect de l'invention, il est proposé un balai d'essuyage de véhicule automobile comprenant un adaptateur conforme au premier aspect de l'invention ou selon l'un quelconque de ses perfectionnements, et une monture de balai d'essuyage, la monture comprenant (i) un palonnier principal sur lequel l'adaptateur est fixé de manière amovible et (ii) deux palonniers secondaires fixés au palonnier principal et supportant une lame d'essuyage.

L'adaptateur conforme au premier aspect de l'invention est ainsi accouplé à la monture au niveau de son palonnier principal, afin de rendre possible un accouplement ultérieur du balai d'essuyage avec un bras articulé de système d'essuyage. Ainsi, et comme expliqué auparavant, il est possible, à l'aide d'un unique adaptateur, de choisir le système d'attache amovible qui correspond au bras articulé correspondant, afin de rendre compatible et à moindres coûts le balai d'essuyage avec une pluralité de systèmes d'essuyages.

Le balai d'essuyage conforme au deuxième aspect de l'invention peut comprendre avantageusement au moins un des perfectionnements ci-dessous, les caractéristiques techniques formant ces perfectionnements pouvant être prises seules ou en combinaison :
- le palonnier principal comprend (i) un évidement central délimité latéralement par deux bords latéraux, l'évidement central du palonnier principal étant situé à l'aplomb de l'ouverture centrale du capot, et (ii) une plateforme qui s'étend transversalement au travers de l'évidement central et entre les deux bords latéraux, la plateforme étant située à l'aplomb du système d'attache amovible de l'adaptateur, de sorte que le système d'attache amovible est en appui contre la plateforme. Plus particulièrement, le bord inférieur de l'au moins un flan latéral de chaque organe de montage formant le système d'attache amovible de l'adaptateur conforme au premier aspect de l'invention est en appui contre la plateforme du palonnier principal de la monture du balai d'essuyage conforme au deuxième aspect de l'invention ;
- une dimension de la plateforme, prise selon la direction longitudinale du capot, est supérieure ou égale à une dimension du ou des organes de montage, prise au niveau de leurs flans latéraux. Cette configuration avantageuse permet de faciliter la mise en appui du ou des organes de montage formant le système d'attache amovible de l'adaptateur conforme au premier aspect de l'invention contre la plateforme du palonnier principal de la monture du balai d'essuyage conforme au deuxième aspect de l'invention ;
- dans le cas où le capot de l'adaptateur conforme au premier aspect de l'invention comprend une encoche formée dans ses côtés latéraux, la plateforme du palonnier principal est configurée pour s'engager dans l'encoche formée dans les côtés latéraux du capot. En d'autres termes, une position longitudinale de la plateforme du palonnier principal par rapport à une position longitudinale des encoches formées dans les côtés latéraux du capot et/ou une dimension de la plateforme - notamment au niveau de ses extrémités latérales - sont telles qu'elles permettent un encastrement - préférentiellement avec un jeu longitudinal et/ou vertical de quelques dixièmes de millimètres - de la plateforme dans les encoches lorsque le capot est monté sur le palonnier principal. Comme évoqué précédemment, cette configuration avantageuse permet de prédéterminer une position relative du capot par rapport au palonnier principale. En outre, cette configuration avantageuse permet aussi de réaliser un détrompage afin de monter le capot dans une seule configuration possible sur le palonnier principal ;

- le palonnier principal comprend, à une première extrémité longitudinale de l'évidement central, un premier logement configuré pour collaborer avec le premier organe de verrouillage longitudinal du capot. En particulier, le premier logement du palonnier principal est configuré pour accueillir la languette rigide du capot. Comme évoqué précédemment, cette configuration permet avantageusement de bloquer longitudinalement et/ou verticalement le capot de l'adaptateur conforme au premier aspect de l'invention par rapport au palonnier principal de la monture de balai d'essuyage ;
- le palonnier principal comprend, à une deuxième extrémité longitudinale de l'évidement central opposée à la première extrémité, un deuxième logement configuré pour collaborer avec le deuxième organe de verrouillage longitudinal du capot. En particulier, le deuxième logement du palonnier principal est configuré pour collaborer par encliquetage avec la languette souple du capot. Comme évoqué précédemment, cette configuration permet avantageusement de bloquer longitudinalement et/ou verticalement le capot de l'adaptateur conforme au premier aspect de l'invention par rapport au palonnier principal de la monture de balai d'essuyage ;
- selon une première alternative, le palonnier principal de la monture de balai d'essuyage est métallique. Selon une deuxième alternative, le palonnier principal de la monture de balai d'essuyage est formé de plastique ;
- dans l'une ou l'autre des alternatives évoquées précédemment, les palonniers secondaires sont avantageusement formés de plastique afin de réduire leur poids et/ou leur coût de fabrication.

Selon un troisième aspect de l'invention, il est proposé un système d'essuyage comprenant au moins un bras articulé fixé de manière détachable à l'adaptateur du balai d'essuyage conforme au deuxième aspect de l'invention ou selon l'un quelconque de ses perfectionnements, chaque bras articulé étant mobile en rotation autour d'un axe de rotation et selon un mouvement contrôlé par un moteur.

Plus particulièrement, chaque bras articulé est connecté à l'adaptateur du balai d'essuyage par l'intermédiaire du système d'attache amovible dudit adaptateur, ledit système d'attache amovible formant préférentiellement un ou plusieurs axes de liaison pivot tel que décrit précédemment. Cette configuration avantageuse permet ainsi d'améliorer le contact de la lame d'essuyage contre la paroi vitrée lorsque le système d'essuyage est mis en oeuvre sur un véhicule automobile par exemple. En outre, il est ainsi possible de détacher facilement le balai d'essuyage et, en adaptant le système d'attache amovible, de rendre un même balai d'essuyage compatible avec une pluralité de bras articulé différents : il suffit de modifier les le type d'organe de montage afin de pouvoir accoupler l'adaptateur et le bras articulé.

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- les FIGURES 1A à 1E illustrent des vues en perspectives de plusieurs exemples de réalisation d'un système d'attache amovible d'un bras articulé de balai d'essuyage sur un adaptateur conforme au premier aspect de l'invention ;
- les FIGURES 2A à 2D illustrent des vues en coupe suivant un plan transversal (ZX) des systèmes d'attache amovible illustrés respectivement sur les FIGURES 1B à 1E ;
- les FIGURES 3A et 3B illustrent des vues en perspective de dessus et de dessous d'un exemple de réalisation d'un capot de l'adaptateur non revendiqué ;
- les FIGURES 4A et 4B illustrent des vues en perspective de dessus et de dessous d'un exemple de réalisation d'un capot de l'adaptateur conforme au premier aspect de l'invention ;
- les FIGURES 5A et 5B illustrent des vues en perspective d'un exemple de réalisation de l'adaptateur non revendiqué, respectivement désassemblé et assemblé, l'adaptateur étant obtenu par l'association du système d'attache amovible illustré sur la FIGURE 1A et du capot illustré aux FIGURES 3A et 3B ;
- les FIGURES 6A et 6B illustrent des vues en perspective d'un exemple de réalisation de l'adaptateur conforme au premier aspect de l'invention, respectivement désassemblé et assemblé, l'adaptateur étant obtenu par l'association du système d'attache amovible illustré sur la FIGURE 1B et du capot illustré aux FIGURES 4A et 4B ;
- les FIGURES 7A et 7B illustrent des vues en perspective d'un exemple de réalisation de balai d'essuyage non revendiqué, respectivement désassemblé et assemblé, le balai d'essuyage étant obtenu par l'association de l'adaptateur illustré sur les FIGURES 5A et 5B avec une monture de balai d'essuyage, la lame d'essuyage n'étant pas représentée ;
- les FIGURES 8A et 8B illustrent des vues en perspective d'un exemple de réalisation de balai d'essuyage conforme au deuxième aspect de l'invention, respectivement désassemblé et assemblé, le balai d'essuyage étant obtenu par l'association de l'adaptateur illustré sur les FIGURES 6A et 6B avec une monture de balai d'essuyage.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

Dans la description qui suit des figures, l'adjectif « longitudinal » fait référence à l'axe X et correspond à une direction d'élongation du capot suivant sa plus grande longueur. Par suite, les adjectif « avant » et « arrière » font respectivement référence aux côtés gauche et droites des figures représentées. L'adjectif « transversal » ou « latéral » fait référence à l'axe Y et correspond à une direction d'élongation perpendiculaire à la direction longitudinale, et l'adjectif « vertical » fait référence à l'axe Z et correspond à une direction simultanément perpendiculaire à la direction longitudinale et à la direction transversale. Les adjectifs « inférieur » et « supérieur » font respectivement références aux bords inférieurs et supérieurs des figures représentées.

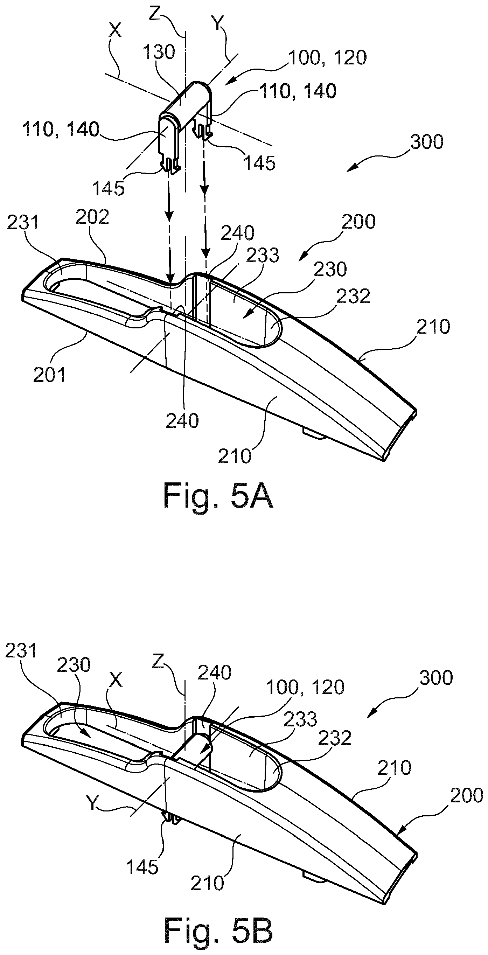

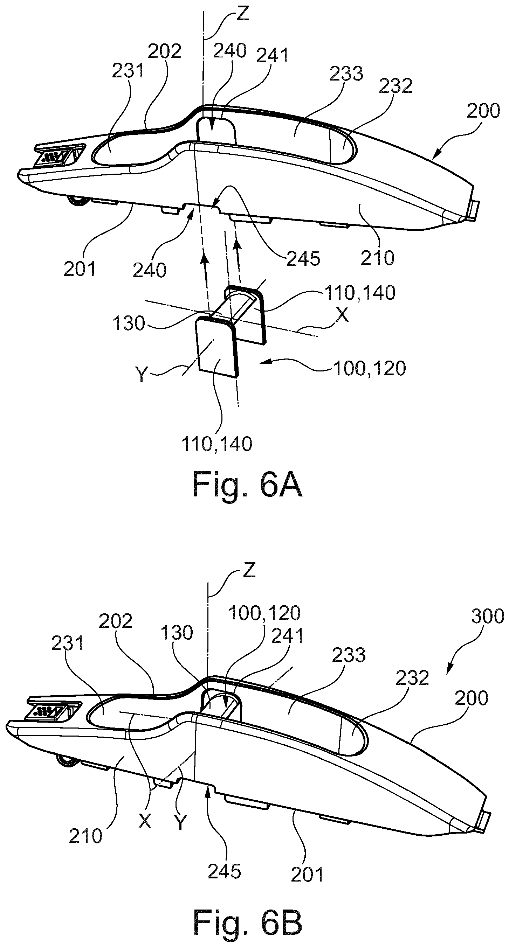

Conformément à l'invention selon son premier aspect, l'invention a trait à un adaptateur 300 pour fixation d'une monture 400 de balai d'essuyage 500 sur un bras articulé de balai d'essuyage. Un tel adaptateur 300 sera décrit plus en détail en référence aux FIGURES 5 et 6. L'adaptateur 300 conforme au premier aspect de l'invention comprend un capot 200 configuré pour être fixé de manière amovible à un palonnier principal 410 de la monture 400 de balai d'essuyage, et un système d'attache amovible 100 du bras articulé de balai d'essuyage sur l'adaptateur 300. Selon l'invention, le système d'attache amovible 100 comprend des moyens de fixation temporaire 110 dudit système d'attache amovible 100 sur le capot 200 de l'adaptateur 300.

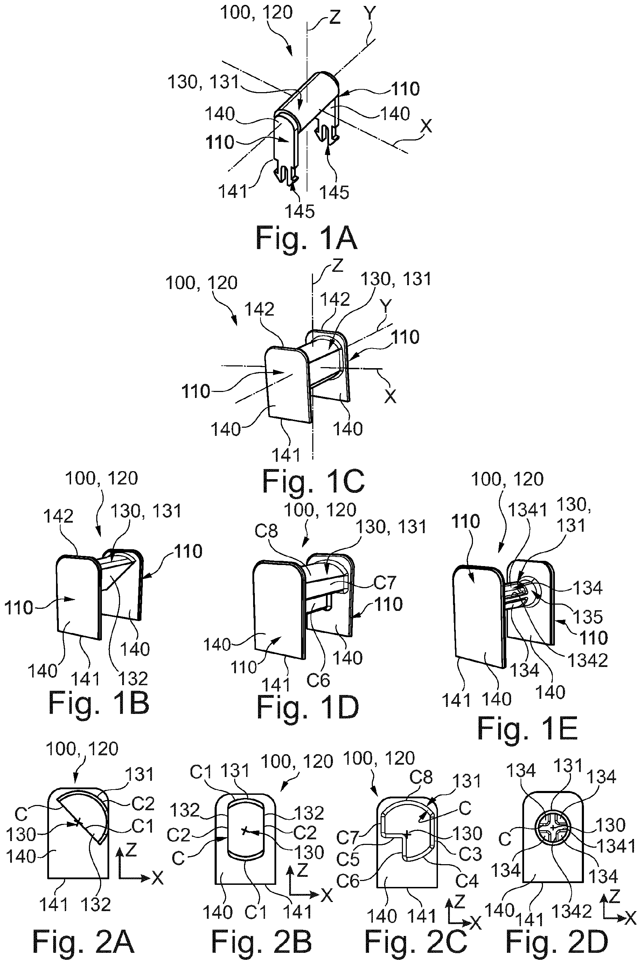

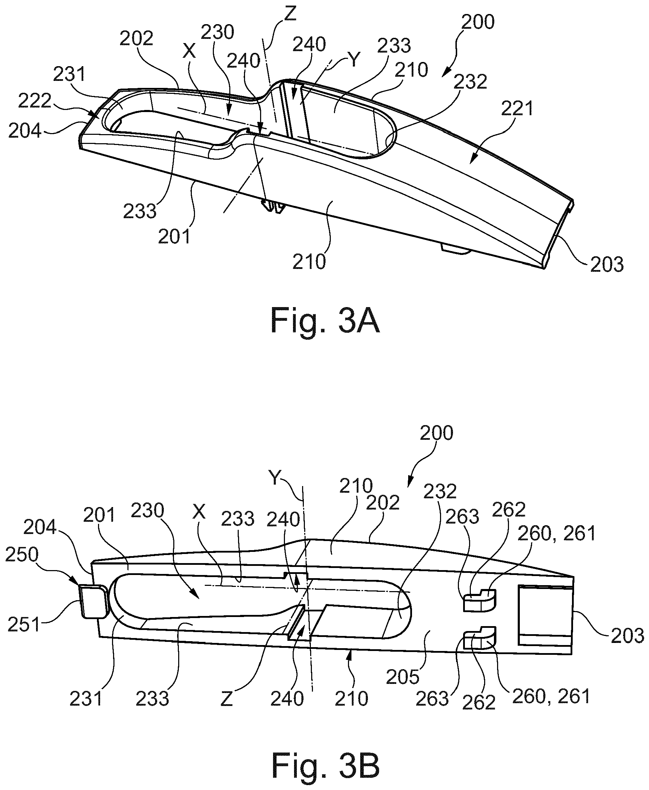

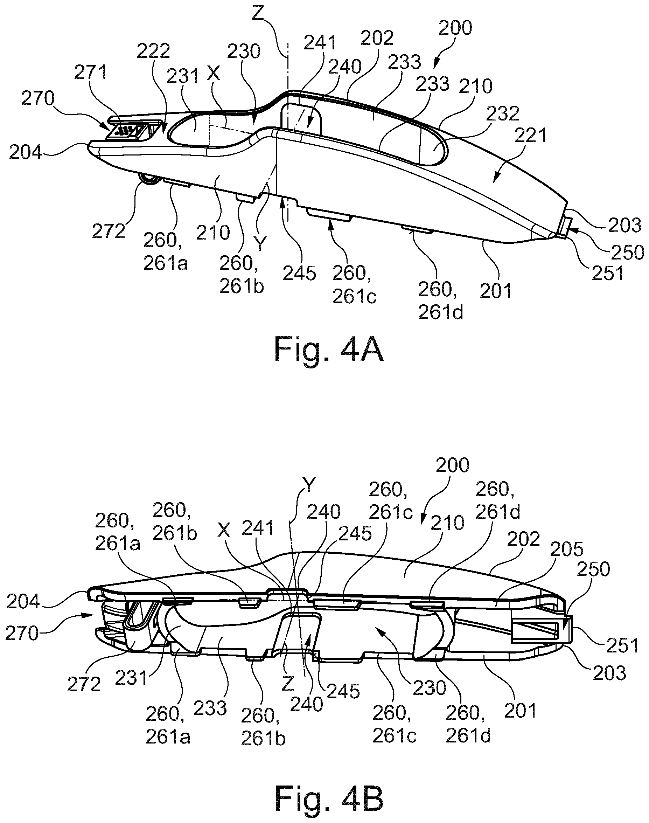

Afin de faciliter la compréhension de l'invention, plusieurs exemples de réalisation des systèmes d'attache amovible 100 vont d'abord être décrits en référence aux FIGURES 1 et 2 ; plusieurs exemples de réalisation de capots 200 seront ensuite décrits en référence aux FIGURES 3 et 4 ; et enfin plusieurs exemples de réalisation de l'adaptateur seront décrits en référence aux FIGURES 5 et 6.

En référence aux FIGURES 1 et 2, le système d'attache amovible 100 comprend avantageusement au moins un organe de montage 120 destiné à être monté dans le capot 200 de l'adaptateur 300. À titre d'exemples non limitatifs, plusieurs variantes de réalisation d'un tel organe de montage 120 sont illustrées, chaque organe de montage 120 étant compatible avec un type particulier de bras articulé de balai d'essuyage. Un intérêt de l'invention réside justement dans la modularité du système d'attache amovible 100 et dans la multiplicité des formes possibles des organes de montage 120 destinés à être assemblés avec le capot 200 de l'adaptateur 300.

D'une manière générale, les organes de montage 120 illustrés sur les FIGURES 1 et 2 prennent la forme de cavaliers destinés à s'étendre au travers d'une ouverture centrale du capot 200, tel qu'il sera décrit en référence aux FIGURES 5 et 6. De tels organes de montage 120 comprennent un axe de liaison pivot 130 qui s'étend suivant l'axe transversal Y de l'adaptateur 300. L'axe de liaison pivot 130 est destiné à collaborer avec une extrémité du bras articulé du balai d'essuyage afin d'accoupler l'adaptateur 300 sur ledit bras articulé suivant une liaison pivot - en rotation autour de l'axe de liaison pivot 130 de l'organe de montage 120 - afin d'améliorer une efficacité du balai d'essuyage.

L'axe de liaison pivot 130 de l'organe de montage 120 est délimité latéralement par deux flans latéraux 140 qui s'étendent chacun à une extrémité latérale de l'axe de liaison pivot 130. Chaque flan latéral prend la forme d'une paroi plane qui s'étend dans un plan formé par l'axe longitudinal X et l'axe vertical Z.

L'axe de liaison pivot 130 est délimité par une surface cylindrique 131 qui s'étend entre deux extrémités latérales de l'axe de liaison pivot 130, et plus particulièrement entre les deux flans latéraux 140 de l'organe de montage 120. La surface cylindrique 131 est avantageusement formée par une pluralité de génératrices qui sont toutes parallèles entre elles et qui sont parallèle à l'axe transversal Y. Comme visible sur les FIGURES 1B à 1E et 2A à 2D, la surface cylindrique 131 peut prendre plusieurs formes :
- les FIGURES 1B et 2A illustrent une première variante de réalisation dans laquelle la surface cylindrique 131 est formée par une courbe directrice C prenant la forme d'un demi-cercle. En d'autres termes, la courbe directrice C est formée par une portion circulaire C1 prenant la forme d'un arc de cercle dont chaque extrémité est reliée par une portion linéaire C2 de la courbe directrice, la portion linéaire C2 étant un diamètre de l'arc de cercle formé par la portion circulaire C1 de la courbe directrice C, relativement à l'axe de liaison pivot 130 illustré sur la FIGURE 2A. Consécutivement, la surface cylindrique 131 de l'axe de liaison pivot 130 comprend un méplat 132 permettant d'améliorer le couplage de l'organe de montage 120 avec le bras articulé du balai d'essuyage. Ainsi, dans cette première variante de réalisation, la surface cylindrique 131 s'étend de manière identique entre les deux flans latéraux 140 de l'organe de montage 120 ;
- les FIGURES 1C et 2B illustrent une deuxième variante de réalisation dans laquelle la surface cylindrique 131 est formée par une courbe directrice C comprenant deux portions circulaires C1 diamétralement opposées et symétriques l'une de l'autre par rapport à l'axe de liaison pivot 130 illustré sur la FIGURE 2B, chaque portion circulaire étant reliée l'une à l'autre par une portion linéaire C2 de la courbe directrice. Les deux portions linéaires sont diamétralement opposées l'une de l'autre par rapport à l'axe de liaison pivot 130 illustré sur la FIGURE 2B. Consécutivement, la surface cylindrique 131 de l'axe de liaison pivot 130 comprend deux méplats 132 diamétralement opposés l'un de l'autre par rapport à l'axe de liaison pivot 130 et permettant d'améliorer le couplage de l'organe de montage 120 avec le bras articulé du balai d'essuyage. Ainsi, dans cette deuxième variante de réalisation, la surface cylindrique 131 s'étend de manière identique entre les deux flans latéraux 140 de l'organe de montage 120 ;
- les FIGURES 1D et 2C illustrent une troisième variante de réalisation dans laquelle la surface cylindrique 131 est formée par une courbe directrice C comprenant (i) deux portions circulaires C4, C8 diamétralement opposées et asymétriques l'une de l'autre par rapport à l'axe de liaison pivot 130 illustré sur la FIGURE 2B, et (ii) une pluralité de segments linéaires C3, C5, C6, C7 formant une forme asymétrique de la surface cylindrique 130 et permettant d'améliorer le couplage de l'organe de montage 120 avec le bras articulé du balai d'essuyage. En particulier, les premier C5 et deuxième C6 segments linéaires sont perpendiculaires l'un par rapport à l'autre afin de former une gorge sur la surface cylindrique 130 de l'organe de montage 120. Cette configuration avantageuse permet aussi d'obtenir une forme asymétrique qui n'autorise qu'une seule configuration d'assemblage du bras articulé du balai d'essuyage sur l'organe de montage 120. Ainsi, dans cette troisième variante de réalisation, la surface cylindrique 131 s'étend de manière identique entre les deux flans latéraux 140 de l'organe de montage 120 ;
- les FIGURES 1E et 2D illustrent une quatrième variante de réalisation dans laquelle, au niveau d'une partie centrale par rapport à l'axe transversal Y, l'axe de liaison pivot 130 comprend une pluralité de gorges 134 délimitées par deux surfaces 1341, 1342 perpendiculaires l'une de l'autres. En d'autres termes, au niveau de la partie centrale, une courbe directrice C délimitant la surface cylindrique 131 ainsi formée a une forme générale en croix, comme visible sur la FIGURE 2D. Au niveau d'une partie d'extrémité latérale, la surface cylindrique 131 prend la forme d'un manchon circulaire 135 visible sur la FIGURE 1E. Ainsi, dans cette quatrième variante de réalisation, la surface cylindrique 131 ne s'étend pas de manière identique entre les deux flans latéraux 140 de l'organe de montage 120 : elle comprend une partie centrale présentant une première courbe directrice C, en forme de croix, la partie centrale étant encadrée par deux parties d'extrémité latérale présentant chacune une deuxième courbe directrice C, circulaire.

Les génératrices délimitant les surfaces cylindriques 131 des différentes variantes de réalisation de l'organe de montage 120 sont avantageusement perpendiculaires aux flans latéraux 140 desdits organes de montage 120.

Relativement à l'axe longitudinal X, les flans latéraux ont des dimensions longitudinales au moins égale à une dimension longitudinale de la surface cylindrique 131 formant l'axe de liaison pivot 130. L'axe de liaison pivot 130 est avantageusement situé au niveau d'une moitié supérieure des flans latéraux 140, relativement à l'axe vertical Z.

Dans les exemples illustrés sur les FIGURES 1B à 1E, un bord supérieur 142 des flans latéraux 140 des organes de montage 120 est avantageusement situé au-dessus de la surface cylindrique 131, relativement à l'axe Z. En revanche, Dans l'exemple illustré sur la FIGURE 1A, un bord supérieur 142 des flans latéraux 140 de l'organe de montage 120 est situé au niveau ou en dessous de la surface cylindrique 131, relativement à l'axe Z.

Dans tous les exemples de réalisation illustrés sur les FIGURES 1 et 2, un bord inférieur 141 - formant une extrémité terminale 141 inférieure - des flans latéraux 140 des organes de montage 120 est situé à distance de la surface cylindrique 131, plus bas que cette dernière. Le bord inférieur 141 des flans latéraux 140 des organes de montage 120 est avantageusement linéaire afin de faciliter un appui desdits organes de montage 120 contre le palonnier principal 410 de la monture 400 de balai d'essuyage, comme il sera décrit ultérieurement.

En outre, et comme visible dans la variante de réalisation de la FIGURE 1A, l'organe de montage 120 peut comprendre, au niveau du bord inférieur 141 de ses flans latéraux 140, un dispositif de solidarisation 145 permettant de solidariser ledit organe de montage 120 au palonnier principal 410 de la monture 400 de balai d'essuyage, lorsque l'adaptateur 300 correspondant est monté sur ladite monture 400. Dans l'exemple illustré sur la FIGURE 1A, le dispositif de solidarisation 145 est du type d'un moyen d'encliquetage configuré pour s'encliqueter dans un dispositif complémentaire formé sur le palonnier principal 410 de la monture 400 de balai d'essuyage.

Dans le contexte de l'invention, et tel qu'il sera expliqué plus en détail en référence aux FIGURES 5 et 6, les flans latéraux 140 des organes de montage 120 forment les moyens de fixation temporaire 110 du système d'attache amovible 100 sur le capot 200 de l'adaptateur 300 conforme au premier aspect de l'invention. En particulier, les flans latéraux 140 des organes de montage 120 sont configurés pour permettre un assemblage par engagement de formes complémentaire entre lesdits flans latéraux 120 et le capot 200 de l'adaptateur 300.

En référence aux FIGURES 3 et 4, deux exemples de réalisation de capots 200 de l'adaptateur 300 vont maintenant être décrits.

Le capot 200 prend la forme d'un module boutonnière d'élongation suivant l'axe longitudinal X. Le capot 200 a une forme allongée et étroite : il s'étend longitudinalement entre une extrémité arrière 203 et une extrémité avant 204, et il est délimité latéralement par deux côtés latéraux 210. Relativement à l'axe vertical, le capot 200 est délimité par un bord inférieur 201 et un bord supérieur 202.

Les exemples de réalisation du capot 200 illustré sur les FIGURES 3 et 4 présentent un plan de symétrie formé par l'axe longitudinal X et l'axe vertical Z.

Le bord inférieur 201 du capot 200 forme une surface plane inférieure 205 destinée à être mise en appui contre la palonnier principal 410 de la monture 400 de balai d'essuyage lorsque l'adaptateur 300 correspondant est accouplé à ladite monture 400. Le bord supérieur 202 du capot 200 forme une surface courbe, contrainte par des considérations aérodynamiques et pour permettre un couplage optimal du bras articulé de balai d'essuyage à l'adaptateur 300.

Entre ses deux côtés latéraux 210 le capot 200 comprend une ouverture centrale 230 au travers de laquelle le système d'attache amovible 100 est destiné à être installé et fixé audit capot 200 de manière temporaire, par l'intermédiaire des moyens de fixation temporaire 110. Dans les exemples illustrés sur les FIGURES 3 et 4, l'ouverture centrale 230 a une forme oblongue. L'ouverture centrale 230 est traversante : elle débouche simultanément au niveau du bord supérieur 202 et du bord inférieur 201 du capot 200. L'ouverture centrale 230 du capot 200 est délimitée longitudinalement par deux surfaces courbes formant des flans avant 231 et arrière 232 de ladite ouverture centrale 230. Latéralement, l'ouverture centrale 230 du capot 200 est délimitée des faces intérieures 233 des côtés latéraux 210 du capot 200.

Longitudinalement, le capot 200 comprend un nez avant 222 et un nez arrière 221 qui encadrent ensemble l'ouverture centrale 230 relativement à l'axe longitudinal X. En d'autres termes le nez arrière 221 est situé entre l'ouverture centrale 230 et l'extrémité arrière 203 du capot 200 ; et le nez avant 222 est situé entre l'ouverture centrale 230 et l'extrémité avant 204 du capot 200. Comme visible respectivement sur les FIGURES 3A et 4A, les nez avant 222 et arrière 221 du capot 200 forme une surface pleine au niveau du bord supérieur 202 dudit capot 200. Cette configuration avantageuse permet d'améliorer les performances aérodynamiques de l'adaptateur lorsqu'il est monté sur la monture 400 d'un balai d'essuyage.

Afin de collaborer avec le système d'attache amovible 100, et plus particulièrement avec les différents types d'organes de montage 120, le capot 200 de l'adaptateur 300 conforme au premier aspect de l'invention comprend au moins une rainure 240 formée sur au moins un des côtés latéraux 210 du capot, du côté de la face intérieure 233 desdits côtés latéraux 210 et délimitant l'ouverture centrale 230. Selon l'axe transversal Y, chaque rainure 240 débouche dans l'ouverture centrale 230 du capot 200.

Dans les exemples de réalisation illustrés sur les FIGURES 3 et 4, chaque côté latéral 210 du capot 200 comprend une seule rainure 240. Chaque rainure 240 est avantageusement située au niveau d'une zone longitudinalement centrée de l'ouverture centrale 230 du capot 200. En outre, relativement à l'axe longitudinal X du capot 200, les ouvertures 240 de chaque côté latéral 210 sont situés en regard l'une de l'autre, une première rainure 240 située sur un premier côté latéral 210 du capot 200 étant située à une même distance longitudinale qu'une deuxième rainure 240 située sur un deuxième côté latéral 210 du capot 200, relativement à l'extrémité arrière 203 du capot 200.

Les rainures 240 situées en regard l'une de l'autre du capot 200 ont avantageusement les mêmes dimensions et/ou formes. En particulier, dans un plan transversal comprenant l'axe transversal Yet l'axe vertical Z, chaque rainure 240 a une section en « U », ladite rainure 240 étant délimitée longitudinalement par deux parois verticales linéaires, et la rainure 240 est délimitée latéralement par une paroi plane parallèle à la face intérieure 233 du côté latéral 210 correspondant du capot 200. En d'autres termes, dans les exemples de réalisation illustrés sur les FIGURES 3 et 4, les rainures 240 présentent une section transversale rectangulaire.

Dans l'exemple illustré sur les FIGURES 3A et 3B, chaque rainure 240 du capot 200 s'étend depuis le bord inférieur 201 en direction d'un bord supérieur 202 dudit capot 200, ladite rainure débouchant de part en part à la fois au niveau dudit bord inférieur 201 et dudit bord supérieur 202 du capot 200. Cette configuration permet avantageusement d'insérer le système d'attache amovible 100 correspondant depuis indifféremment le bord inférieur 201 ou depuis le bord supérieur 202 du capot 200.

Dans l'exemple illustré sur les FIGURES 4A et 4B, chaque rainure 240 du capot 200 s'étend depuis le bord inférieur 201 en direction d'un bord supérieur 202 dudit capot 200. Cependant, à la différence du mode de réalisation précédent, les rainures 240 ne débouchent pas au niveau du bord supérieur 202 du capot 200 : elles sont délimitées verticalement par un rebord 241, ledit rebord 241 formant une extrémité supérieure auxdites rainures 240. Cette configuration permet d'une part de définir un sens d'insertion unique du système d'attache amovible 100 dans le capot 200, depuis le bord inférieur 201 vers le bord supérieur 202 du capot 200. D'autre part, cette configuration permet de réaliser un appui vertical du système d'attache amovible 100 contre le rebord 241 de la rainure 240, comme il sera décrit plus en détail en référence aux FIGURES 5 et 6.

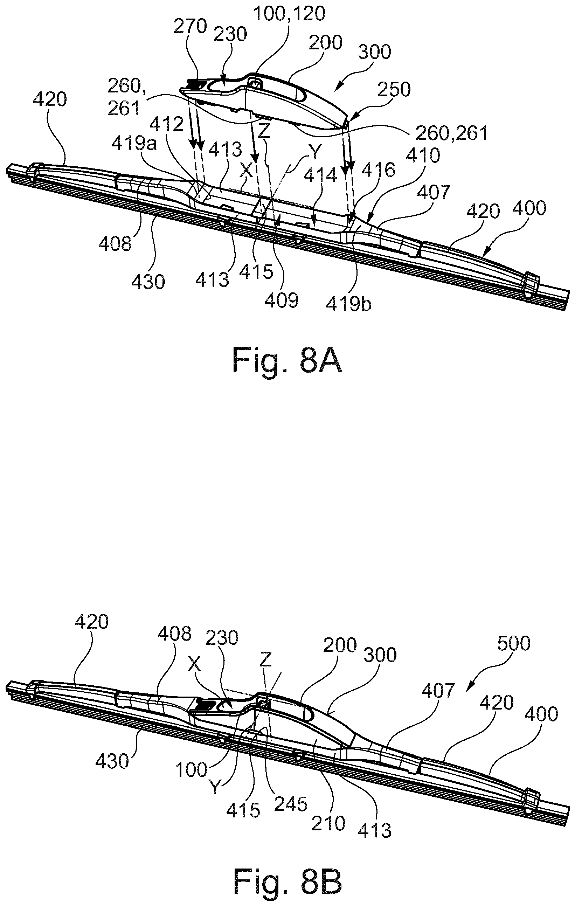

Dans l'exemple illustré sur les FIGURES 4A et 4B, au niveau du bord inférieur 201 destiné à être en appui contre le palonnier principal 410 de la monture 400 de balai d'essuyage, les deux côtés latéraux 210 du capot 200 de l'adaptateur 300 conforme au premier aspect de l'invention comprennent une encoche 245 destinée à permettre l'insertion d'une plateforme d'appui du palonnier principal 410 dans ladite encoche 245, comme il sera décrit en référence aux FIGURES 8A et 8B. L'encoche 245 ainsi formée sur les côtés latéraux 210 du capot 200 s'étend en direction du bord supérieur 202 dudit capot. L'encoche 245 est située dans le prolongement vertical de la rainure 240 correspondante du côté latéral 210 correspondant du capot 200. En particulier, une dimension de l'encoche 245, prise selon l'axe longitudinal X du capot 200, est légèrement supérieure à une dimension de la rainure 240 correspondante prise le long du même axe longitudinal X. Dans la direction transversale Y, chaque encoche 245 est traversante et débouche de chaque côté du côté latéral 210 correspondant du capot 200.

De manière avantageuse, relativement à l'axe longitudinal X du capot 200, chaque encoche 245 est située à une même distance longitudinale de l'extrémité arrière 203 du capot 200. En d'autres termes, les encoches 245 de chaque côté latéral 210 du capot sont situées en regard l'une de l'autre. Les encoches 245 situées en regard l'une de l'autre du capot 200 ont avantageusement les mêmes dimensions et/ou les mêmes formes.

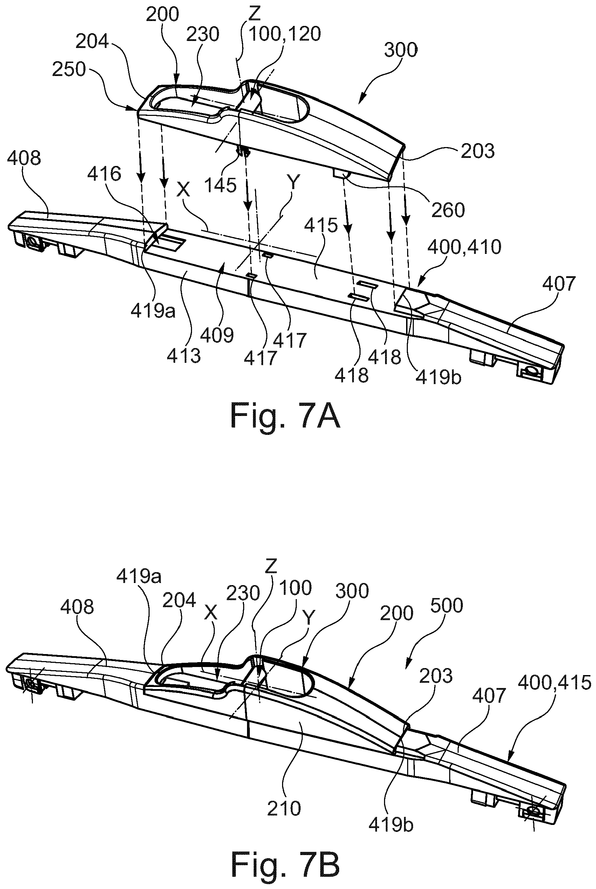

Afin de permettre d'accoupler le capot 200 sur la palonnier principal 410 de la monture 400 de balai d'essuyage avec laquelle l'adaptateur 300 conforme au premier aspect de l'invention est destiné à collaborer, le capot 200 comprend un premier organe de verrouillage longitudinal 250. Le premier organe de verrouillage longitudinal 250 est configuré pour réaliser un arrêt longitudinal du capot 200 contre le palonnier principal 410. La collaboration entre le premier organe de verrouillage longitudinal 250 et le palonnier principal 410 de la monture 400 de balai d'essuyage sera décrite plus précisément en référence aux FIGURES 7 et 8.

Dans l'exemple de réalisation illustré sur les FIGURES 3A et 3B, le premier organe de verrouillage longitudinal 250 est situé au niveau de l'extrémité avant 204 du capot 200. Dans l'exemple de réalisation illustré sur les FIGURES 4A et 4B, le premier organe de verrouillage longitudinal 250 est situé au niveau de l'extrémité arrière 203 du capot 200.

Le premier organe de verrouillage longitudinal 250 prend la forme d'une languette rigide configurée pour collaborer par engagement de formes complémentaires avec un premier logement complémentaire formé sur le palonnier principal 410 de la monture 400 de balai d'essuyage, comme il sera décrit ultérieurement. Dans les exemples illustrés sur les FIGURES 3 et 4, le premier organe de verrouillage longitudinal 250 prend la forme d'une protrusion prismatique qui s'étend :
- relativement à l'axe vertical Z, en saillie en dessous de la surface plane inférieure 205 du capot 200 ;
- relativement à l'axe longitudinal X, en saillie au-delà de l'extrémité avant 204 ou arrière 203 du capot 200, c'est-à-dire dans une direction opposée à ladite extrémité avant 204 ou arrière 203 par rapport à l'ouverture centrale 230 du capot 200 ;
- relativement à l'axe transversal Y, entre les deux côtés latéraux 210 du capot 200.

Afin d'améliorer l'accouplement du capot 200 sur la palonnier principal 410 de la monture 400 de balai d'essuyage avec laquelle l'adaptateur 300 conforme au premier aspect de l'invention est destiné à collaborer, et comme visible sur les FIGURES 4A et 4B, le capot 200 comprend un deuxième organe de verrouillage longitudinal 270. Le deuxième organe de verrouillage longitudinal 270 est configuré pour réaliser un arrêt longitudinal du capot 200 contre le palonnier principal 410. La collaboration entre le deuxième organe de verrouillage longitudinal 270 et le palonnier principal 410 de la monture 400 de balai d'essuyage sera décrite plus précisément en référence aux FIGURES 8A et 8B.

Le deuxième organe de verrouillage longitudinal 270 est situé longitudinalement à l'opposé du premier organe de verrouillage longitudinal 250. Dans l'exemple de réalisation illustré sur les FIGURES 4A et 4B, le deuxième organe de verrouillage longitudinal 270 est situé au niveau de l'extrémité avant 203 du capot 200. Le deuxième organe de verrouillage longitudinal 270 prend la forme d'une languette souple configurée pour collaborer par encliquetage avec un deuxième logement complémentaire formé sur le palonnier principal 410 de la monture 400 de balai d'essuyage, comme il sera décrit ultérieurement. Le deuxième organe de verrouillage longitudinal 270 comprend une casquette d'appui 271 solidaire d'une languette en U 272 qui s'étend sous la surface plane inférieure 205 du capot. La languette en U 272 est reliée élastiquement au nez avant 231 du capot 200, par amincissement local de matière afin de permettre une déformation locale élastique de la languette souple formant le deuxième organe de verrouillage élastique 270.

Afin de faciliter le montage du capot 200 sur le palonnier principal 410 de la monture 400 de balai d'essuyage avec laquelle l'adaptateur 300 conforme au premier aspect de l'invention est destiné à collaborer, et afin d'améliorer la liaison mécanique entre eux face à des efforts d'arrachement latéraux - apparaissant par exemple lorsque le bras d'essuyage est mis en oeuvre sur un véhicule automobile roulant et soumis à un flux d'air aérodynamique - le capot 200 comprend un organe de centrage latéral 260 dudit capot 200 par rapport au palonnier principal 410 de la monture 400 de balai d'essuyage. Plus particulièrement, l'organe de centrage latéral 260 est configuré pour centrer latéralement le capot 200 sur le palonnier principal 410.

L'organe de centrage latéral 260 du capot 200 comprend au moins une patte de centrage qui s'étend en saillie à partir du bord inférieur 201 du capot 200, c'est-à-dire en dessous de la surface plane inférieure 205 relativement à l'axe vertical Z.

Selon une première alternative illustrée sur les FIGURES 3A et AB, l'organe de centrage latéral 260 comprend deux pattes de centrage 261 qui prennent la forme de crochets d'ancrage. Chaque crochet d'ancrage s'étend verticalement en dessous de la surface plane inférieure 205 du capot 200. Dans un plan transversal du capot 200, les crochets d'ancrage formant les pattes de centrage 261 présentent un profil en « L », une extrémité 263 de la portée d'élongation longitudinale 262 des crochets d'ancrage étant orientée du côté de l'ouverture centrale 230 du capot 200. Dans cette première alternative, les pattes de centrages 261 sont situées longitudinalement au niveau du nez arrière 221 du capot 200.

Selon une deuxième alternative illustrée sur les FIGURES 4A et 4B, l'organe de centrage latéral 260 comprend une pluralité de pattes de centrage 261a-261d réparties longitudinalement et de manière symétrique par rapport à l'axe longitudinal en dessous de chaque côté latéral 210 du capot 200. Plus particulièrement, le capot 200 comprend deux jeux de 4 pattes de centrage 261a-261d réparties sur chaque côté latéral 210 dudit capot 200. Dans cette alternative de réalisation, chaque patte de centrage 261a-261d prend la forme d'une protrusion prismatique qui s'étendent en dessous de la surface plane inférieure 205 du capot 200 suivant l'axe vertical Z, et dans le prolongement des côtés latéraux 210 dudit capot 200. Des dimensions longitudinales de chaque patte de centrage 261a-261d varie d'une patte de centrage 261a-261d à l'autre. En revanche, chaque patte de centrage 261a-261d d'un premier jeu de pattes de centrage 261a-261d situé sur un premier côté latéral 210 du capot 200 est identique - en forme et en dimension - de la patte de centrage 261a-261d correspondante d'un deuxième jeu de pattes de centrage 261a-261d située sur le deuxième côté latéral 210 dudit capot 200 et en regard de la patte de centrage 261a-261d correspondante dudit premier jeu.

Dans cette deuxième alternative illustrée sur les FIGURES 4A et 4B, une épaisseur latérale des pattes de centrage 261a-261d, prise le long de l'axe transversal Y du capot 200, est inférieure à une dimension latérale du côté latéral 210 correspondant dudit capot 200. Plus particulièrement, une épaisseur latérale des pattes de centrage 261a-261d est avantageusement égale à la moitié d'une épaisseur latérale du côté latéral 210 correspondant pris au niveau de ladite patte de centrage 261a-261d. En outre, relativement à l'axe transversal Y, les pattes de centrage 261a-261d sont toutes situées du côté de l'ouverture centrale 230, de sorte qu'une paroi latérale des pattes de centrage soit coplanaire avec les faces intérieures 233 des côtés latéraux 210 du capot 200.

Dans la deuxième variante de réalisation, chaque patte de centrage 261a-261d est configurée pour collaborer avec un côté latéral correspondant du palonnier principal 410 de la monture 400 de balai d'essuyage avec laquelle l'adaptateur 300 conforme au premier aspect de l'invention est destiné à collaborer.

En référence aux FIGURES 5 et 6, le système d'attache amovible 100 tel que décrit précédemment est assemblé sur le capot 200 afin de former l'adaptateur conforme au premier aspect de l'invention. En particulier, les FIGURES 5A et 5B illustrent un premier exemple de réalisation de l'adaptateur 300 conforme au premier aspect de l'invention obtenu par l'association du système d'attache amovible 100 illustré sur la FIGURE 1A et du capot 200 illustré aux FIGURES 3A et 3B, l'adaptateur 300 étant respectivement illustré au travers d'une vue éclatée et assemblée. De manière analogue, les FIGURES 6A et 6B illustrent un deuxième exemple de réalisation de l'adaptateur 300 conforme au premier aspect de l'invention, obtenu par l'association du système d'attache amovible 100 illustré sur la FIGURE 1B et du capot 200 illustré aux FIGURES 4A et 4B, l'adaptateur 300 étant respectivement illustré au travers d'une vue éclatée et assemblée.

Dans l'exemple de réalisation illustré sur les FIGURES 5A et 5B, l'organe de montage 120 formant le système d'attache amovible 100 est inséré dans le capot 200, au niveau de son ouverture centrale 230, par un mouvement de translation suivant l'axe vertical Z depuis le haut, comme illustré sur la FIGURE 5A, ou éventuellement depuis le bas. Cette double possibilité pour insérer l'organe de montage dans les rainures 240 correspondantes du capot 200 est permise du fait que lesdites rainures 240 s'étendent linéairement depuis le bord inférieur 201 du capot 200 vers son bord supérieur 202.

Afin de faciliter l'insertion de l'organe de montage 120 dans la rainure 240 du capot 200, une dimension de la rainure 240 prise suivant l'axe longitudinal X est sensiblement égale - voire légèrement supérieure, aux tolérances d'assemblage près, à une dimension du flan latéral 140 correspondant de l'organe de montage 120 prise suivant le même axe longitudinal X.

Une fois inséré entre les deux côtés latéraux 210 du capot 200, l'organe de montage 120 est ainsi ajusté sans jeu latéral : il est maintenu en position par le frottement des flans latéraux 140 dudit organe de montage 120 contre la rainure 240 du capot 200 située en regard. Les flans latéraux 140 de l'organe de montage 120 forment ainsi les moyens de fixation temporaire 110 dudit système d'attache amovible 100 sur le capot 200, lesdits moyens de fixation temporaire 110 collaborant avec les rainures 240 en regard du capot 200 pour assembler l'organe de montage 120 par accouplement de formes complémentaires et préférentiellement sans jeu latéral. Cet ajustement sans jeu permet de réaliser de manière astucieuse une rétention de l'organe de montage 120 dans l'ouverture centrale 230 du capot 200, entre ses côtés latéraux 210.

Comme visible sur la FIGURE 5B, lorsque l'organe de montage 120 est assemblé sur le capot 200, l'axe de liaison pivot 130 est situé sous le bord supérieur 202 du capot 200, pris au niveau de la rainure 240 correspondante. En outre, lorsque l'organe de montage 120 est assemblé sur le capot 200, le dispositif de solidarisation 145 - prenant ici la forme d'un moyen d'encliquetage - est situé sous le bord inférieur 201 du capot 200.

Dans l'exemple de réalisation illustré sur les FIGURES 6A et 6B, l'organe de montage 120 formant le système d'attache amovible 100 est inséré dans le capot 200, au niveau de son ouverture centrale 230, par un mouvement de translation suivant l'axe vertical Z depuis le bas, comme illustré sur la FIGURE 6A. Dans ce cas, il n'est pas possible d'insérer l'organe de montage 120 dans les rainures 240 correspondantes du capot 200 depuis le haut du capot 200. En effet, comme décrit précédemment en référence aux FIGURES 4A et4B, les rainures 240 du capot 200 s'étendent linéairement depuis le bord inférieur 201 du capot 200 et sont délimitées par le rebord 241 formant l'extrémité supérieure desdites rainures 240.

De manière comparable à l'exemple de réalisation illustré sur les FIGURES 5, et afin de faciliter l'insertion de l'organe de montage 120 dans la rainure 240 du capot 200, une dimension de la rainure 240 prise suivant l'axe longitudinal X est sensiblement égale - voire légèrement supérieure, aux tolérances d'assemblage près, à une dimension du flan latéral 140 correspondant de l'organe de montage 120 prise suivant le même axe longitudinal X.

Une fois inséré entre les deux côtés latéraux 210 du capot 200, l'organe de montage 120 est ainsi ajusté sans jeu latéral : il est maintenu en position par le frottement des flans latéraux 140 dudit organe de montage 120 contre la rainure 240 du capot 200 située en regard. Les flans latéraux 140 de l'organe de montage 120 forment ainsi les moyens de fixation temporaire 110 dudit système d'attache amovible 100 sur le capot 200, lesdits moyens de fixation temporaire 110 collaborant avec les rainures 240 en regard du capot 200 pour assembler l'organe de montage 120 par accouplement de formes complémentaires et préférentiellement sans jeu latéral. Cet ajustement sans jeu permet de réaliser de manière astucieuse une rétention de l'organe de montage 120 dans l'ouverture centrale 230 du capot 200, entre ses côtés latéraux 210.

En outre, un bord supérieur des flans latéraux 140 de l'organe de montage 120 est en appui contre le rebord 241 des rainures 240 du capot 200. Cette configuration avantageuse permet d'arrêter verticalement l'organe de montage 120 vers le haut relativement au capot 200, améliorant ainsi la fiabilité de l'assemblage mécanique du système d'attache amovible 100 dans le capot 200 de l'adaptateur 300 conforme au premier aspect de l'invention.

Comme visible sur la FIGURE 6B, lorsque l'organe de montage 120 est assemblé sur le capot 200, l'axe de liaison pivot 130 est situé sous le bord supérieur 202 du capot 200, pris au niveau de la rainure 240 correspondante. En outre, lorsque l'organe de montage 120 est assemblé sur le capot 200, un bord inférieur des flans latéraux 140 de l'organe de montage 120 est situé au-dessus des encoches 245 formées dans les côtés latéraux 210 du capot 200.

En référence aux FIGURES 7 et 8, deux exemples de réalisation d'un balai d'essuyage 500 conforme au deuxième aspect de l'invention vont maintenant être décrits. Plus particulièrement, les FIGURES 7A et 7B illustrent des vues partielles du balai d'essuyage 500, dans lesquelles seuls l'adaptateur 300 et le palonnier principal 410 sont représentés afin de mieux mettre en avant leur collaboration. Les FIGURES 8A et 8B illustrent des vues d'un balai d'essuyage 500 conforme au deuxième aspect de l'invention.

Un tel balai d'essuyage 500 conforme au deuxième aspect de l'invention comprend un adaptateur 300 conforme au premier aspect de l'invention et tel que décrit précédemment dans l'une ou l'autre de ses variantes de réalisation, et une monture 400 comprenant :
- un palonnier principal 410 sur lequel l'adaptateur 300 est fixé de manière amovible ;
- deux palonniers secondaires 420 fixés solidairement au palonnier principal 410 et supportant une lame d'essuyage 430 destinée à racler une paroi vitrée d'un véhicule automobile afin de pouvoir en évacuer l'eau présente à sa surface.

Le palonnier principal 410 de la monture 400 de balai d'essuyage prend une forme allongée suivant l'axe longitudinal X et plus étroite suivant l'axe transversal Y et l'axe vertical Z.

Relativement à l'axe longitudinal X, le palonnier principal 410 comprend une zone centrale 409 délimitée longitudinalement par un nez avant 408 et un nez arrière 407. La zone centrale 409 du palonnier principal 410 est configurée pour collaborer avec l'adaptateur 300, et plus particulièrement avec le capot 200. Le nez avant 408 et le nez arrière 407 sont configurée pour collaborer avec les palonniers secondaires 420 et comprennent des moyens de fixation détachables desdits palonniers secondaires 420 sur le palonnier principal 410.

Une dimension transversale de la zone centrale 409 du palonnier principal 410 est égale à une dimension transversale du capot 200 de l'adaptateur 300. Plus particulièrement, des bords latéraux 413 de la zone centrale 409 sont avantageusement situés dans le prolongement des côtés latéraux 210 du capot 200. Comme visible sur la FIGURE 7B, les bords latéraux 413 de la zone centrale 409 sont coplanaires aux côtés latéraux 210 du capot 200.

Une dimension longitudinale de la zone centrale 409 est telle qu'elle permet d'insérer le capot 200 entre le nez avant 408 et le nez arrière 407 du palonnier principal 410. Plus particulièrement, lorsque l'adaptateur 300 est monté sur le palonnier principal 410 de la monture 400, l'extrémité arrière 203 du capot 200 est en appui contre une butée arrière 419b du palonnier principal 410 ; et l'extrémité avant 204 du capot 200 est en appui contre une butée avant 419a du palonnier principal 410. De cette manière, le capot 200 - et, par extension, l'adaptateur 300 - est bloqué longitudinalement sur la zone centrale 409 du palonnier principal 410.

Dans l'exemple illustré sur les FIGURES 7A et 7B, la zone centrale 409 est pleine et prend la forme d'une plateforme 415 d'appui pour le capot 200 de l'adaptateur 300. Plus particulièrement, la surface plane inférieure 205 du capot 200 est en appui vertical contre la plateforme d'appui 415, permettant ainsi de faciliter sa mise en position et son maintien sur le palonnier principal 410.

Afin d'améliorer l'assemblage mécanique temporaire, c'est-à-dire détachable, de l'adaptateur 300 sur le palonnier principal 410, le premier organe de verrouillage longitudinal 250 du capot 200 collabore avec un premier logement 416 situé à une première extrémité longitudinale avant de la plateforme d'appui 415. Plus particulièrement, lorsque le capot 200 est assemblé sur le palonnier principal 410, le premier organe de verrouillage longitudinal 250 du capot 200 est inséré successivement dans le premier logement 416 puis sous le nez avant 408 par un mouvement de rotation, de sorte que l'extrémité avant 204 du capot 200 soit en appui contre la butée avant 419a du palonnier principal 410. Ensuite, l'extrémité arrière 203 du capot 200 est approchée de la butée arrière 419b du palonnier principal 410 afin de bloquer longitudinalement ledit capot 200 entre les butées avant 419a et arrière 419b.

Durant cette opération d'assemblage, les organes de centrage latéral 260 du capot - qui prennent la forme de crochets d'ancrage dans l'exemple de réalisation du capot 200 illustré sur les FIGURES 7A et 7B - sont insérés dans des ouvertures correspondantes 418 formées sur la plateforme d'appui 415 du palonnier principal 410, afin d'éviter un arrachement du capot 200 par rapport au palonnier principal 410.

Afin d'améliorer l'assemblage du système d'attache amovible 100 de l'adaptateur 300 sur le palonnier principal 410 de la monture 400 de balai d'essuyage 500, le dispositif de solidarisation 145 de l'adaptateur 300 collabore avec des ouvertures 417 correspondantes formées sur la plateforme d'appui 415 du palonnier principal 410 et formant un dispositif complémentaire permettant audit dispositif de solidarisation 145 de s'accoupler avec lesdites ouvertures 417 correspondantes par engagement de formes complémentaires, ici par encliquetage.

Dans l'exemple illustré sur les FIGURES 8A et 8B, la zone centrale 409 est creuse et forme un évidement central 414 délimité latéralement par les bords latéraux 413 du palonnier principal 410. Le palonnier principal 410 comprend une plateforme 415 qui s'étend latéralement entre les deux bords latéraux 413. Dans cet exemple de réalisation, lorsque l'adaptateur 300 est monté sur la monture 400 du balai d'essuyage 500, la surface plane inférieure 205 du capot 200 est en appui vertical une extrémité supérieure des bords latéraux 413.

Afin de garantir le maintien du capot 200 sur la palonnier principal 410, les organes de centrage latéral 260 du capot 200 - prenant ici la forme des protrusion prismatiques 261 situées dans le prolongement des côtés latéraux 210 du capot 200 - collaborent avec les bords latéraux 413 du palonnier principal 410. Plus particulièrement, lorsque le capot 200 est monté sur le palonnier principal 410, les protrusions prismatiques 261 du capot sont situés dans l'évidement central 414 du palonnier et - simultanément - contre les bords latéraux 413 du palonnier principal 410 situés directement en regard. En d'autres termes, les protrusions prismatiques 261 sont situés à l'intérieurs et contre les bords latéraux 413 du palonnier principal 410. Comme le capot 200 comprend de telles protrusions prismatiques 261 sur chacun de ses côtés latéraux 210, alors les organes de centrage latéral 260 et les bords latéraux 413 du palonnier principal 410 permettent ensemble de centrer latéralement ledit capot 200 par rapport audit palonnier principal 410.

Lorsque le capot 200 est assemblé sur le palonnier principal 410, la plateforme d'appui 415 est située à l'aplomb du système d'attache amovible 100 de l'adaptateur 300. Plus particulièrement, lorsque le capot 200 est assemblé sur le palonnier principal 410, la plateforme d'appui 415 est située à l'aplomb de l'organe de montage 120 de l'adaptateur 300. Plus particulièrement encore, lorsque le capot 200 est assemblé sur le palonnier principal 410, la plateforme d'appui 415 est située à l'aplomb - et directement en dessous - des flans latéraux 140 de l'organe de montage 120, de sorte que l'extrémité terminale 141 des flans latéraux 140 est en appui vertical contre la plateforme 415 d'appui du palonnier principal 410. Cette configuration avantageuse permet de bloquer verticalement l'organe de montage 120, entre le rebord 241 de la rainures 240 du capot et la plateforme d'appui 415 du palonnier principal 410.

Dans cette configuration assemblée, visible plus précisément sur la FIGURE 8B, l'encoche 245 formée sur les côtés latéraux 210 du capot 200, au niveau de son bord inférieur 201, enjambe la plateforme d'appui 415 du palonnier principal 410. Cette configuration avantageuse permet notamment de proposer un unique sens de montage, la plateforme d'appui 415 et l'encoche 245 formant ensemble un détrompeur pour l'assemblage de l'adaptateur 300 sur la palonnier principal 410 de la monture 400 de balai d'essuyage 500.

Afin d'améliorer l'assemblage mécanique temporaire, c'est-à-dire détachable, de l'adaptateur 300 sur le palonnier principal 410, le premier organe de verrouillage longitudinal 250 du capot 200 collabore avec un premier logement 416 situé à une première extrémité longitudinale arrière de la plateforme d'appui 415, et le deuxième organe de verrouillage longitudinal 270 du capot 200 collabore avec un deuxième logement 412 situé à une deuxième extrémité longitudinale avant de la plateforme d'appui 415. Plus particulièrement, lorsque le capot 200 est assemblé sur le palonnier principal 410, le premier organe de verrouillage longitudinal 250 du capot 200 est inséré successivement dans le premier logement 416 puis sous le nez arrière 407 par un mouvement de rotation, de sorte que l'extrémité arrière 203 du capot 200 soit en appui contre la butée arrière 419b du palonnier principal 410. Ensuite, l'extrémité avant 204 du capot 200 est approchée de la butée avant 419a du palonnier principal 410 afin de bloquer longitudinalement ledit capot 200 entre les butées avant 419a et arrière 419b. Lors de ce mouvement de rotation, le deuxième organe de verrouillage 270 collabore par encliquetage avec le deuxième logement 412 du palonnier principal 410.

En synthèse, l'invention concerne notamment un adaptateur 300 pour une monture 400 de balai d'essuyage, l'adaptateur 300 comprenant un capot 200 configuré pour loger à l'intérieur d'une ouverture centrale 230 un système d'attache amovible 100 qui permet une fixation temporaire ultérieure dudit adaptateur 300 avec un bras articulé de balai d'essuyage, lorsque ledit adaptateur 300 est mis en oeuvre sur un balai d'essuyage 500. À cet effet, le système d'attache amovible 100 comprend un ou plusieurs organes de montage 120 qui prennent la forme de cavaliers configurés pour être insérés de manière amovible dans l'ouverture centrale 230 et maintenues dans cette configuration par l'intermédiaire de moyens de fixation temporaire 110.

L'invention concerne aussi un balai d'essuyage comprenant un tel adaptateur 300 monté sur une monture 400 de balai d'essuyage 500.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Adaptateur (300) pour fixation d'une monture (400) de balai d'essuyage (500) sur un bras articulé de balai d'essuyage (500), l'adaptateur (300) comprenant :
- un capot (200) configuré pour être fixé de manière amovible à un palonnier principal (410) de la monture (400) de balai d'essuyage (500), le capot (200) comprenant une ouverture centrale (230) délimitée latéralement par deux côtés latéraux (210), au moins un des deux côtés latéraux (210) du capot (200) comprenant une rainure (240) formée sur une face du ou des côtés latéraux (210) située du côté de l'ouverture centrale (230), la rainure (240) s'étendant depuis un bord inférieur (201) en direction d'un bord supérieur (202),
- un système d'attache amovible (100) du bras articulé de balai d'essuyage (500) sur l'adaptateur (300) comprenant des moyens de fixation temporaire (110) dudit système d'attache amovible (100) sur le capot (200), le système d'attache amovible (100) comprenant au moins un organe de montage (120) qui s'étend transversalement au travers de l'ouverture centrale (230) entre les deux cotés latéraux du capot (200), chaque organe de montage (120) comprenant les moyens de fixation temporaire (110) au capot (200), l'au moins un organe de montage (120) comprend un axe de liaison pivot (130) qui s'étend transversalement au travers de l'ouverture centrale (230) entre les deux côtés latéraux (210) du capot (200), l'axe de liaison pivot (130) étant délimité latéralement par deux flans latéraux (140) **caractérisé en ce que** la rainure (240)est obstruée au niveau d'une extrémité supérieure par un rebord (241)permettant l'insertion de l'organe de montage (120)correspondant par le bord inférieur du capot, l'organe de montage (120) étant inséré jusqu'à venir en butée contre le rebord (241) afin de définir une position verticale de l'organe de montage par rapport au capot.

2. Adaptateur (300) selon la revendication précédente, dans lequel chaque organe de montage (120) comprend un ou deux flans latéraux (140) qui s'étendent chacun à une extrémité latérale de l'axe de liaison pivot (130).

3. Adaptateur (300) selon la revendication précédente, dans lequel dans un plan perpendiculaire à l'axe de liaison pivot (130) de chaque organe de montage (120), le ou les flans latéraux (140) s'étendent au-delà de la surface cylindrique (131), de sorte qu'une extrémité terminale (141) du ou des flans latéraux (140) se trouve à une distance non nulle de l'axe de liaison pivot (130).

4. Adaptateur (300) selon l'une quelconque des revendications précédentes, dans lequel au moins un des côtés latéraux (210) du capot (200) comprend, au niveau d'un bord inférieur (201) destiné à être en appui contre le palonnier principal (410), une encoche (245) destinée à permettre l'insertion d'une plateforme d'appui du palonnier principal (410).

5. Adaptateur (300) selon l'une quelconque des revendications précédentes, dans lequel au moins un des organes de montage comprend un dispositif de solidarisation avec le palonnier principal (410) de la monture (400) du balai d'essuyage (500).

6. Adaptateur (300) selon l'une quelconque des revendications précédentes, dans lequel le capot (200) comprend un premier organe de verrouillage longitudinal du capot (200) sur le palonnier principal de la monture (400) de balai d'essuyage (500), le premier organe de verrouillage longitudinal (250) étant configuré pour réaliser un arrêt longitudinal du capot (200) contre le palonnier principal (410).

7. Adaptateur (300) selon la revendication précédente, dans lequel le capot (200) comprend un deuxième organe de verrouillage longitudinal (270) du capot (200) sur le palonnier principal (410) de la monture (400) de balai d'essuyage (500).

8. Balai d'essuyage (500) de véhicule automobile comprenant :
- un adaptateur (300) selon l'une quelconque des revendications précédentes ;
- une monture (400) de balai d'essuyage (500), la monture (400) comprenant :
∘ un palonnier principal (410) sur lequel l'adaptateur (300) est fixé de manière amovible ;
∘ deux palonniers secondaires (420) fixés au palonnier principal (410) et supportant une lame d'essuyage (430).

9. Balai d'essuyage (500) selon la revendication précédente et pris en combinaison avec l'adaptateur (300) selon l'une quelconque des revendications 1 à 7, dans lequel le palonnier principal (410) comprend :
- un évidement central (414) délimité latéralement par deux bords latéraux (413), l'évidement central (414) du palonnier principal (410) étant situé à l'aplomb de l'ouverture centrale (230) du capot (200) ;
- une plateforme (415) qui s'étend transversalement au travers de l'évidement central (414) et entre les deux bords latéraux (413), la plateforme (414) étant située à l'aplomb du système d'attache amovible (100) de l'adaptateur (300), de sorte que le système d'attache amovible (100) est en appui contre la plateforme (414).

10. Balai d'essuyage (500) selon la revendication précédente et pris en combinaison avec l'adaptateur (300) selon la revendication 4, dans lequel la plateforme (414) du palonnier principal (410) est configurée pour s'engager dans l'encoche (245) formée dans les côtés latéraux (210) du capot (200).

11. Balai d'essuyage (500) selon l'une quelconque des revendications 8 à 10 et pris en combinaison avec l'adaptateur (300) selon la revendication 6, dans lequel le palonnier principal (410) comprend, à une première extrémité longitudinale de l'évidement central (414), un premier logement (416) configuré pour collaborer avec le premier organe de verrouillage longitudinal (250) du capot (200).

12. Balai d'essuyage (500) selon l'une quelconque des revendications 8 à 11 et pris en combinaison avec l'adaptateur (300) selon la revendication 1, dans lequel le palonnier principal (410) comprend, à une deuxième extrémité longitudinale de l'évidement central (414) opposée à la première extrémité, un deuxième logement (412) configuré pour collaborer avec le deuxième organe de verrouillage longitudinal (270) du capot (200).

## Patentansprüche

1. Adapter (300) zur Befestigung einer Halterung (400) eines Wischerblattes (500) an einem Gelenkarm des Wischerblattes (500), wobei der Adapter (300) umfasst:
- eine Kappe (200), die dafür ausgelegt ist, lösbar an einem Hauptbügel (410) der Halterung (400) des Wischerblattes (500) befestigt zu werden, wobei die Kappe (200) eine zentrale Öffnung (230) umfasst, die seitlich von zwei lateralen Seiten (210) begrenzt wird, wobei mindestens eine der zwei lateralen Seiten (210) der Kappe (200) eine auf einer Seitenfläche der lateralen Seite oder Seiten (210) ausgebildete Nut (240) umfasst, die sich auf der Seite der zentralen Öffnung (230) befindet, wobei sich die Nut (240) von einem unteren Rand (201) aus in Richtung eines oberen Randes (202) erstreckt,
- ein System zur lösbaren Anbringung (100) des Gelenkarmes des Wischerblattes (500) am Adapter (300), welches Mittel zur vorübergehenden Befestigung (110) des Systems zur lösbaren Anbringung (100) an der Kappe (200) umfasst, wobei das System zur lösbaren Anbringung (100) mindestens ein Montageelement (120) umfasst, welches sich zwischen den zwei lateralen Seiten der Kappe (200) quer durch die zentrale Öffnung (230) hindurch erstreckt, wobei jedes Montageelement (120) Mittel zur vorübergehenden Befestigung (110) an der Kappe (200) umfasst, wobei das mindestens eine Montageelement (120) einen Schwenkverbindungsbolzen (130) umfasst, welcher sich zwischen den zwei lateralen Seiten (210) der Kappe (200) quer durch die zentrale Öffnung (230) hindurch erstreckt, wobei der Schwenkverbindungsbolzen (130) seitlich von zwei Seitenplatten (140) begrenzt wird,
**dadurch gekennzeichnet, dass** die Nut (240) an einem oberen Ende durch eine Randleiste (241) versperrt ist, die das Einführen des entsprechenden Montageelements (120) vom unteren Rand der Kappe her ermöglicht, wobei das Montageelement (120) eingeführt wird, bis es an der Randleiste (241) zur Anlage kommt, um eine vertikale Position des Montageelements in Bezug auf die Kappe zu definieren.

2. Adapter (300) nach dem vorhergehenden Anspruch, wobei jedes Montageelement (120) eine oder zwei Seitenplatten (140) umfasst, welche sich jeweils an einem seitlichen Ende des Schwenkverbindungsbolzens (130) erstrecken.

3. Adapter (300) nach dem vorhergehenden Anspruch, wobei in einer zum Schwenkverbindungsbolzen (130) jedes Montageelements (120) senkrechten Ebene die Seitenplatte oder die Seitenplatten (140) sich über die zylindrische Fläche (131) hinaus erstrecken, so dass ein Abschlussende (141) der Seitenplatte oder der Seitenplatten (140) sich in einem von null verschiedenen Abstand von dem Schwenkverbindungsbolzen (130) befindet.

4. Adapter (300) nach einem der vorhergehenden Ansprüche, wobei mindestens eine der lateralen Seiten (210) der Kappe (200) an einem unteren Rand (201), der dazu bestimmt ist, an dem Hauptbügel (410) zur Anlage zu kommen, eine Aussparung (245) umfasst, die dazu bestimmt ist, das Einsetzen einer Stützplattform des Hauptbügels (410) zu ermöglichen.

5. Adapter (300) nach einem der vorhergehenden Ansprüche, wobei mindestens eines der Montageelemente eine Vorrichtung zur festen Verbindung mit dem Hauptbügel (410) der Halterung (400) des Wischerblattes (500) umfasst.

6. Adapter (300) nach einem der vorhergehenden Ansprüche, wobei die Kappe (200) ein erstes Element zur Längsverriegelung der Kappe (200) auf dem Hauptbügel der Halterung (400) des Wischerblattes (500) umfasst, wobei das erste Element zur Längsverriegelung (250) dafür ausgelegt ist, eine Arretierung der Kappe (200) in Längsrichtung am Hauptbügel (410) zu bewirken.

7. Adapter (300) nach einem der vorhergehenden Ansprüche, wobei die Kappe (200) ein zweites Element zur Längsverriegelung (270) der Kappe (200) auf dem Hauptbügel (410) der Halterung (400) des Wischerblattes (500) umfasst.

8. Wischerblatt (500) eines Kraftfahrzeugs, umfassend:
- einen Adapter (300) nach einem der vorhergehenden Ansprüche,
- eine Halterung (400) eines Wischerblattes (500), wobei die Halterung (400) umfasst:
o einen Hauptbügel (410), an welchem der Adapter (300) lösbar befestigt ist,
o zwei sekundäre Bügel (420), die am Hauptbügel (410) befestigt sind und einen Wischergummi (430) tragen.

9. Wischerblatt (500) nach dem vorhergehenden Anspruch und in Kombination mit dem Adapter (300) nach einem der Ansprüche 1 bis 7, wobei der Hauptbügel (410) umfasst:
- eine zentrale Vertiefung (414), die seitlich von zwei Seitenrändern (413) begrenzt wird, wobei sich die zentrale Vertiefung (414) des Hauptbügels (410) senkrecht unter der zentralen Öffnung (230) der Kappe (200) befindet;
- eine Plattform (415) welche sich quer durch die zentrale Vertiefung (414) hindurch und zwischen den zwei Seitenrändern (413) erstreckt, wobei sich die Plattform (414) senkrecht unter dem System zur lösbaren Anbringung (100) des Adapters (300) befindet, derart, dass das System zur lösbaren Anbringung (100) an der Plattform (414) anliegt.

10. Wischerblatt (500) nach dem vorhergehenden Anspruch und in Kombination mit dem Adapter (300) nach Anspruch 4, wobei die Plattform (414) des Hauptbügels (410) dafür ausgelegt ist, in die Aussparung (245) einzugreifen, die in den lateralen Seiten (210) der Kappe (200) ausgebildet ist.

11. Wischerblatt (500) nach einem der Ansprüche 8 bis 10 und in Kombination mit dem Adapter (300) nach Anspruch 6, wobei der Hauptbügel (410) an einem ersten Längsende der zentralen Vertiefung (414) eine erste Aufnahme (416) umfasst, die dafür ausgelegt ist, mit dem ersten Element zur Längsverriegelung (250) der Kappe (200) zusammenzuwirken.

12. Wischerblatt (500) nach einem der Ansprüche 8 bis 11 und in Kombination mit dem Adapter (300) nach Anspruch 1, wobei der Hauptbügel (410) an einem zweiten Längsende der zentralen Vertiefung (414), das dem ersten Ende gegenüberliegt, eine zweite Aufnahme (412) umfasst, die dafür ausgelegt ist, mit dem zweiten Element zur Längsverriegelung (270) der Kappe (200) zusammenzuwirken.

## Claims

1. An adapter (300) for fastening a wiper blade (500) mount (400) on an articulated wiper blade (500) arm, the adapter (300) comprising:
- a cover (200) configured to be removably fastened to a main cross-bar (410) of the wiper blade (500) mount (400), the cover (200) comprising a central opening (230) delimited laterally by two lateral sides (210), at least one of the two lateral sides (210) of the cover (200) comprising a groove (240) formed on one face of the lateral side or sides (210) located on the side of the central opening (230), the groove (240) extending from a lower edge (201) toward an upper edge (202), the groove (240) being blocked at an upper end by a rim (241);
- a removable attachment system (100) for removably attaching the articulated wiper blade (500) arm to the adapter (300) comprisingtemporary fastening means (110) for temporarily fastening said removable attachment system (100) to the cover (200), the removable attachment system (100) comprising at least one mounting member (120) extending transversely through the central opening (230) between the two lateral sides of the cover (200), each mounting member (120) comprising temporary fastening means (110) for temporary fastening to the cover (200), the at least one mounting member (120) comprising a pivot connection rod (130) extending transversely through the central opening (230) between the two lateral sides (210) of the cover (200), the pivot connection rod (130) being delimited laterally by two lateral flanks (140),
**characterized in that** the groove (240) is blocked at an upper end by a rim (241) permitting the insertion of the corresponding mounting member (120) by the lower edge of the cover (200), the mounting member (120) being inserted until coming into abutment against the rim (241) so as to define a vertical position of the mounting member relative to the cover.

2. The adapter (300) as claimed in the preceding claim, wherein each mounting member (120) comprises one or two lateral flanks (140) which each extend at a lateral end of the pivot connection rod (130).

3. The adapter (300) as claimed in the preceding claim, wherein in a plane perpendicular to the pivot connection rod (130) of each mounting member (120), the lateral flank or flanks (140) extend beyond the cylindrical surface (131), such that a terminal end (141) of the lateral flank or flanks (140) is at a non-zero distance from the pivot connection rod (130).

4. The adapter (300) as claimed in any one of the preceding claims, wherein at least one of the lateral sides (210) of the cover (200) comprises, on a lower edge (201) intended to bear against the main cross-bar (410), a notch (245) intended to allow the insertion of a support platform of the main cross-bar (410).

5. The adapter (300) as claimed in any one of the preceding claims, wherein at least one of the mounting members includes a device for securing to the main cross-bar (410) of the wiper blade (500) mount (400).

6. The adapter (300) as claimed in any one of the preceding claims, wherein the cover (200) comprises a first longitudinal locking member for locking the cover (200) on the main cross-bar of the wiper blade (500) mount (400), the first longitudinal locking member (250) being configured to place the cover (200) in longitudinal abutment against the main cross-bar (410).

7. The adapter (300) as claimed in the preceding claim, wherein the cover (200) comprises a second longitudinal locking member (270) for locking the cover (200) on the main cross-bar (410) of the wiper blade (500) mount (400).

8. A wiper blade (500) for a motor vehicle comprising:
- an adapter (300) as claimed in any one of the preceding claims;
- a wiper blade (500) mount (400), the mount (400) comprising:
ο a main cross-bar (410) to which the adapter (300) is removably fastened;
∘ two secondary cross-bars (420) fastened to the main cross-bar (410) and supporting a wiper rubber (430).

9. The wiper blade (500) as claimed in the preceding claim, considered in conjunction with the adapter (300) as claimed in any one of claims 1 to 7, wherein the main cross-bar (410) comprises:
- a central recess (414) delimited laterally by two lateral edges (413), the central recess (414) in the main cross-bar (410) being located in line with the central opening (230) in the cover (200);
- a platform (415) which extends transversely through the central recess (414) and between the two lateral edges (413), the platform (414) being located in line with the removable attachment system (100) of the adapter (300), so that the removable attachment system (100) bears against the platform (414).

10. The wiper blade (500) as claimed in the preceding claim, considered in conjunction with the adapter (300) as claimed in claim 4 , wherein the platform (414) of the main cross-bar (410) is configured to engage in the notch (245) formed in the lateral sides (210) of the cover (200).

11. The wiper blade (500) as claimed in any one of claims 8 to 10, considered in conjunction with the adapter (300) as claimed in claim 6, wherein the main cross-bar (410) comprises, at a first longitudinal end of the central recess (414), a first housing (416) configured to interact with the first longitudinal locking member (250) of the cover (200).

12. The wiper blade (500) as claimed in any one of claims 8 to 11, considered in conjunction with the adapter (300) as claimed in claim 1, wherein the main cross-bar (410) comprises, at a second longitudinal end of the central recess (414) opposite the first end, a second housing (412) configured to interact with the second longitudinal locking member (270) of the cover (200).
